# FASCICULE DE BREVET EUROPEEN

(11) **EP 3 877 252 B1**
(45) Date de publication et mention de la délivrance du brevet: **11.01.2023**
(21) Numéro de dépôt: 19800985.4
(22) Date de dépôt: 06.11.2019
(51) Int. Cl.: B64C 1/14, E05B 65/10

(54) **DISPOSITIF D'OUVERTURE D'URGENCE D'UNE PORTE D'AÉRONEF, À DÉBRAYAGE ROTATIF**
NOTÖFFNUNGSVORRICHTUNG FÜR EINE FLUGZEUGTÜR MIT DREHFREIGABE
EMERGENCY OPENING DEVICE FOR AN AIRCRAFT DOOR, WITH ROTARY RELEASE

(30) Priorité: 08.11.2018 FR 1860285
(43) Date de publication de la demande: 15.09.2021
(73) Titulaire: Latecoere, 31500 Toulouse, Occitanie (FR)
(72) Inventeur: CAPRON, Nicolas, 31320 CASTANET TOLOSAN OCCITANIE (FR)
(74) Mandataire: Junca, Eric
(86) Numéro de dépôt international: PCT/EP2019/080332
(87) Numéro de publication internationale: WO 2020/094688

(56) Documents cités:
- EP-A1- 3 323 709
- FR-A1- 2 319 758
- FR-A1- 2 975 967
- FR-A1- 3 040 721
- US-A- 5 031 863

## Description

### DOMAINE TECHNIQUE

L'invention concerne le domaine de l'aéronautique et a trait à un dispositif d'ouverture d'urgence d'une porte d'aéronef dotée d'un mécanisme d'ouverture.

Les portes d'aéronef sont munies d'un mécanisme d'ouverture pour permettre la sortie et l'entrée de passagers ou pour permettre l'évacuation en cas d'urgence. En cas d'évacuation d'urgence des passagers, les portes d'aéronefs, qu'elles soient des portes de passagers ou des portes d'évacuation d'urgence, comportent usuellement un dispositif d'ouverture d'urgence qui, s'il est activé, provoque une ouverture rapide et automatique des portes, sans nécessiter d'intervention humaine autre que son activation.

De tels dispositifs d'ouverture d'urgence comprennent classiquement des moyens d'actionnement du mécanisme d'ouverture de la porte, commutables entre un état passif et un état actif provoquant l'ouverture de la porte, et des moyens d'activation des moyens d'actionnement permettant à un utilisateur de déclencher l'ouverture d'urgence.

### ART ANTÉRIEUR

La demande de brevet FR2975967 décrit un dispositif d'ouverture d'urgence d'aéronef qui consiste en des moyens d'actionnement de conception essentiellement mécaniques mettant en œuvre des moyens élastiques de compression et permettant de se passer d'éléments pneumatiques, hydrauliques ou pyrotechniques. Le dispositif d'ouverture d'urgence décrit rempli de plus une fonction d'ouverture de service permettant à la porte de s'ouvrir et se fermer en fonctionnement normal, c'est à dire hors des phases d'ouverture d'urgence. Après une phase d'ouverture d'urgence, la porte d'aéronef peut être refermée en réarmant le dispositif d'ouverture d'urgence à l'aide d'un outil par lequel une tige filetée est vissée, provoquant la compression des moyens élastiques de compression.

### EXPOSÉ DE L'INVENTION

L'invention a pour but d'améliorer les dispositifs d'ouverture d'urgence de porte d'aéronef de l'art antérieur.

A cet effet, l'invention vise un dispositif d'ouverture d'urgence d'une porte d'aéronef dotée d'un mécanisme d'ouverture, comprenant :
- des moyens d'actionnement du mécanisme d'ouverture, commutables entre un état passif et un état actif d'activation du mécanisme d'ouverture, et comprenant : un organe de manœuvre tubulaire doté d'une première extrémité de liaison avec la porte, et d'une deuxième extrémité de verrouillage ; des moyens élastiques de compression disposés entre un élément de butée fixe et l'organe de manœuvre ; un organe de retenue de la deuxième extrémité de verrouillage, mobile entre une position fermée de verrouillage de la deuxième extrémité de verrouillage, dans une position de l'organe de manœuvre correspondant à l'état passif des moyens d'actionnement dans laquelle les moyens élastiques sont maintenus comprimés, et une position ouverte de libération de la deuxième extrémité de verrouillage autorisant le déplacement de l'organe de manœuvre selon un axe de déplacement vers une position correspondant à l'état actif des moyens d'actionnement, sous l'effet de l'effort résultant de l'expansion des moyens élastiques ;
- des moyens d'activation des moyens d'actionnement adaptés pour entrainer l'ouverture de l'organe de retenue.

Dans ce dispositif :
- l'organe de manœuvre comporte un élément de première extrémité et un élément de deuxième extrémité mobiles en translation l'un par rapport à l'autre suivant l'axe de déplacement, la première extrémité de l'organe de manœuvre étant située sur l'élément de première extrémité et la deuxième extrémité de verrouillage de l'organe de manœuvre étant située sur l'élément de deuxième extrémité ;
- l'élément de première extrémité comporte une butée rotative escamotable cylindrique, mobile entre : une première position angulaire de transmission où la butée rotative présente une surface d'entrainement en vis-à-vis de l'élément de deuxième extrémité, l'élément de deuxième extrémité étant alors adapté à entrainer en translation selon l'axe de déplacement l'élément de première extrémité, lors de l'activation des moyens d'actionnement ; et une deuxième position angulaire de débrayage où la butée rotative présente une section englobée dans le contour d'une ouverture de débrayage pratiquée dans l'élément de deuxième extrémité, l'élément de première extrémité étant alors librement coulissant en translation selon l'axe de déplacement par rapport à l'élément de deuxième extrémité.

Dans la présente description et les revendications, l'expression « liaison avec la porte » s'entend relativement à la porte d'aéronef au sens large. La porte d'aéronef au sens large inclut l'ouvrant de la porte, le mécanisme d'ouverture de porte, ou encore la structure encadrant la porte et reliée au fuselage (correspondant au chambranle de la porte). Ainsi, la première extrémité de l'organe d'actionnement est reliée à un élément de la porte (ouvrant, mécanisme d'ouverture, ou structure encadrante) et l'élément de butée fixe est reliée à un autre élément de la porte (ouvrant, mécanisme d'ouverture, ou structure encadrante) tels que l'expansion des moyens élastiques provoque l'actionnement du mécanisme d'ouverture de la porte, et l'ouverture effective de la porte. Par exemple, la première extrémité de l'organe d'actionnement peut être fixée sur le mécanisme d'ouverture de la porte, et l'élément de butée fixe peut être fixé sur l'ouvrant de la porte. Autre exemple, la première extrémité de l'organe d'actionnement peut être fixée sur l'ouvrant de la porte, et l'élément de butée fixe peut être fixé sur la structure encadrante de la porte.

Un tel dispositif d'ouverture d'urgence présente tous les avantages d'un dispositif mécanique tel que décrit dans le document FR2975967. La conception mécanique des moyens d'actionnement ne requiert pas de maintenance particulière en l'absence d'utilisation du dispositif d'ouverture. L'utilisation du dispositif d'ouverture n'implique pas qu'un organe de déclenchement doive être remplacé, comme avec les dispositifs pneumatiques ou pyrotechniques. Aucun fluide moteur n'est nécessaire pour activer les moyens d'actionnement.

Le dispositif d'ouverture d'urgence selon l'invention présente de plus une masse et un encombrement réduit. Toutes les fonctions liées au déclenchement de l'ouverture d'urgence ainsi qu'à l'ouverture de service sont regroupées autour d'un même axe de déplacement de l'organe d'actionnement. Un tel dispositif forme un produit fini de type vérin mécanique entièrement autonome, ce qui est un gage de fiabilité et de sureté de fonctionnement appréciables dans le domaine de l'aéronautique et plus particulièrement des dispositifs d'ouverture de secours. En plus du gain de masse, qui est une caractéristique critique dans l'aéronautique, la compacité du dispositif permet son installation au sein de portes d'aéronefs complexes, comportant de nombreux équipements tels que dispositifs de sécurité, hublots, dispositifs de vision, dispositifs d'assistance divers, capotages esthétiques, etc.

La fonction d'ouverture de service est remplie par des moyens particulièrement compacts faisant partie de l'organe de manœuvre. L'agencement de l'organe de manœuvre qui est constitué d'un élément de première extrémité et d'un élément de deuxième extrémité, permet la mise en œuvre de cette fonction d'ouverture de service lorsque le dispositif d'ouverture d'urgence est à l'état passif, c'est-à-dire lors du fonctionnement normal de la porte d'aéronef. La porte d'aéronef peut ainsi être ouverte et fermée de manière classique pour permettre l'embarquement et le débarquement des passagers et le verrouillage de la porte lors du vol de l'aéronef. De plus, les moyens permettant cette ouverture de service sont ici mis à profit pour remplir une fonction supplémentaire de débrayage du dispositif d'ouverture d'urgence. En effet, en cas d'ouverture d'urgence, les moyens d'actionnement du mécanisme d'ouverture sont commutés dans leur état actif ce qui entraine l'ouverture rapide de la porte sous l'effet des moyens élastiques de compression. Suite à cette ouverture, d'urgence, la porte est maintenue en position ouverte sous l'effet de la sollicitation continue des moyens élastiques de compression. Le débrayage du dispositif d'ouverture d'urgence permet de refermer la porte d'aéronef rapidement, sans devoir réarmer ce dernier, c'est-à-dire sans devoir comprimer à nouveau les moyens élastiques de compression. Les moyens élastiques de compression, prévus pour une ouverture rapide de la porte d'aéronef, présentent un fort tarage qui rend le réarmement du dispositif d'ouverture d'urgence long et difficile.

Le débrayage du dispositif d'ouverture d'urgence permet par exemple, lors des opérations de maintenance, de tester le dispositif d'urgence en l'activant et en pouvant cependant par la suite refermer facilement et rapidement la porte d'aéronef par l'action d'un seul opérateur. De plus, en cas d'ouverture d'urgence, il peut arriver que le membre de l'équipage ayant activé le dispositif d'ouverture d'urgence, constate après l'ouverture rapide de la porte que cette dernière s'est ouverte sur un environnement dangereux. Dans ce cas, le débrayage du dispositif d'ouverture d'urgence permet à ce membre de l'équipage de refermer immédiatement la porte en agissant directement sur la butée rotative et en refermant manuellement la porte. Dans ces conditions, la porte d'aéronef peut être manœuvrée en fermeture et en ouverture normalement bien que le dispositif d'ouverture d'urgence ait été déclenché. Cela permet non seulement la fermeture d'urgence de la porte d'aéronef comme décrit précédemment mais aussi un redécollage de l'appareil jusqu'à une prochaine opération de maintenance où le dispositif d'ouverture d'urgence sera réarmé.

Bien que le dispositif d'ouverture d'urgence intègre ces fonctions supplémentaires d'ouverture de service et de débrayage, il reste entièrement mécanique garantissant un fonctionnement indépendant de toute source d'énergie ainsi qu'une fiabilité accrue.

Le dispositif d'ouverture d'urgence peut comporter les caractéristiques additionnelles suivantes, seules ou en combinaison :
- la butée rotative est montée tournante autour de l'axe de déplacement ;
- la butée rotative est montée glissante le long de l'axe ;
- la section de la butée rotative présente une dissymétrie de révolution ;
- l'ouverture de débrayage de l'élément de deuxième extrémité présente une section ajustée à la section de la butée rotative ;
- la butée rotative est formée d'un manchon dont la surface interne est un cylindre à base circulaire et dont la surface externe est un cylindre comportant au moins un méplat, ce manchon étant monté selon une liaison pivot glissant sur une portion de l'élément de première extrémité qui présente une surface externe cylindrique à base circulaire, la surface d'entrainement étant constituée par la tranche de ce manchon ;
- l'ouverture de débrayage de l'élément de deuxième extrémité comporte au moins un méplat sur sa surface interne, le méplat de la butée rotative étant en vis-à-vis du méplat de l'élément de deuxième extrémité lorsque la butée rotative est dans sa deuxième position angulaire de débrayage ;
- l'ouverture de débrayage de l'élément de deuxième extrémité comporte sur sa surface interne une portion de guidage de l'élément de première extrémité ;
- le dispositif comporte une bague d'arrêt en rotation fixée sur l'élément de première extrémité, la butée rotative et la bague d'arrêt en rotation étant solidarisables en rotation par des dents insérées dans des encoches ;
- l'élément de première extrémité comporte un ressort sollicitant la butée rotative contre la bague d'arrêt en rotation ;
- le ressort est disposé dans une gorge dans laquelle le ressort peut rentrer complètement ;
- l'élément de première extrémité comporte une surface d'arrêt de la translation selon l'axe de déplacement de la butée rotative, cette surface d'arrêt étant disposée en vis-à-vis de la butée rotative, à l'opposé de la surface d'entrainement ;
- l'élément de deuxième extrémité comporte une collerette d'appui des moyens élastiques de compression, cette collerette étant disposée autour de l'ouverture de débrayage de l'élément de deuxième extrémité ;
- le dispositif comporte un cylindre de coulissement coaxial avec l'axe de déplacement, l'élément de première extrémité et l'élément de deuxième extrémité étant montés coulissants sur ce cylindre de coulissement ;
- le cylindre de coulissement comporte une butée de fin de course pour l'organe de manœuvre ;
- l'élément de première extrémité et l'élément de deuxième extrémité sont montés chacun sur le cylindre de coulissement par une bague de friction ;
- le cylindre de coulissement comporte une première portion et une deuxième portion de sections différentes, l'élément de première extrémité étant monté coulissant sur la première portion et l'élément de deuxième extrémité étant monté sur la deuxième portion ;
- le cylindre de coulissement est fixé sur l'élément de butée fixe ;
- l'organe de retenue est monté tournant sur le cylindre de coulissement ;
- la butée de fin de course est réalisée par une rainure pratiquée dans le cylindre de coulissement, dans laquelle est inséré un doigt axial de retenue solidaire de la deuxième extrémité de l'organe de manœuvre.

### PRÉSENTATION DES FIGURES

D'autres caractéristiques et avantages de l'invention ressortiront de la description qui en est faite ci-après, à titre indicatif et nullement limitatif, en référence aux dessins annexés, dans lesquels :
[Fig.1] La figure 1 représente en perspective un dispositif d'ouverture d'urgence d'une porte d'aéronef, selon l'invention, dans son état passif ;
[Fig.2] La figure 2 est une vue en coupe du dispositif de la figure 1 ;
[Fig.3] La figure 3 représente en perspective le dispositif de la figure 1 dans son état actif ;
[Fig.4] La figure 4 est une vue en coupe du dispositif de la figure 3 ;
[Fig.5] La figure 5 est une vue en coupe du dispositif de la figure 1 illustrant la fonction d'ouverture de service ;
[Fig.6] La figure 6 représente en perspective la butée rotative du dispositif des figures 1 à 5 ;
[Fig.7] La figure 7 représente en perspective l'élément de deuxième extrémité de l'organe de manœuvre du dispositif des figures 1 à 5 ;
[Fig.8] La figure 8 représente en perspective le dispositif de la figure 3 et illustre la manœuvre de la butée rotative en vue du passage en mode débrayé ;
[Fig.9] La figure 9 représente le dispositif de la figure 7 en mode débrayé ;
[Fig.10] La figure 10 est une vue en coupe du dispositif de la figure 9.

### DESCRIPTION DÉTAILLÉE

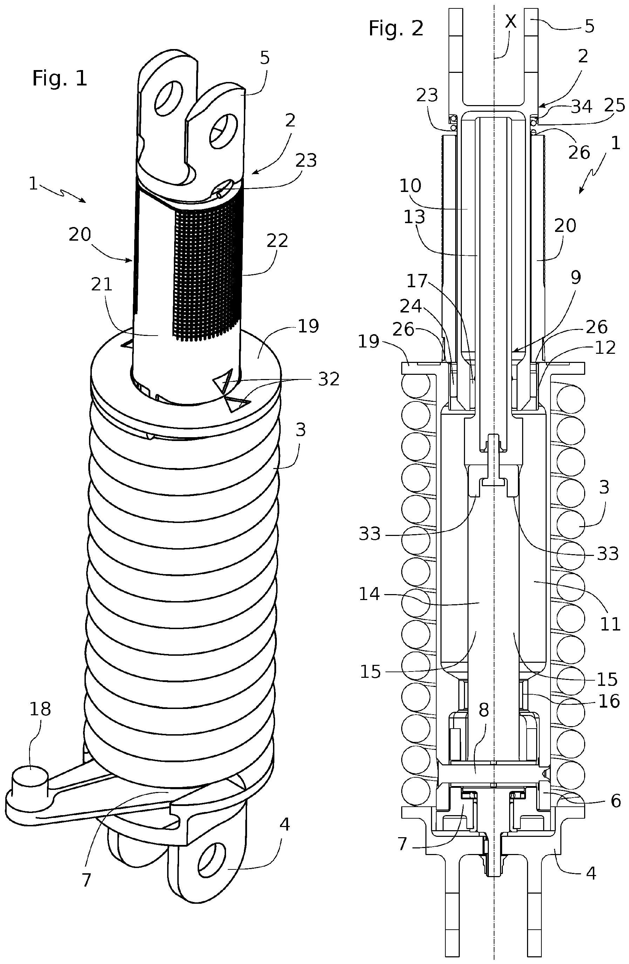

Les figures 1 et 2 représentent un dispositif d'ouverture d'urgence 1 selon l'invention dans son état passif. Ce dispositif 1 se présente sous la forme d'un actionneur compact adapté à provoquer l'ouverture d'urgence d'une porte d'aéronef dotée d'un mécanisme d'ouverture. Les portes d'aéronef sont généralement dotées d'un mécanisme d'ouverture comportant par exemple des systèmes de charnières et de bras de support permettant à la porte d'aéronef d'être mobile entre une position fermée et une position ouverte. Ce mécanisme d'ouverture est utilisé pour une ouverture manuelle ou motorisée de la porte d'aéronef en vue des opérations normales d'embarquement et de débarquement de passagers. Le dispositif 1 permet l'ouverture d'urgence automatique de la porte d'aéronef. A cet effet, le dispositif 1 comporte des moyens d'actionnement du mécanisme d'ouverture de la porte d'aéronef, ces moyens d'actionnement comportant un organe de manœuvre tubulaire 2 ainsi que des moyens élastiques de compression qui sont, dans le présent exemple, constitués d'un ressort 3 d'un tarage suffisant pour provoquer l'ouverture rapide de la porte d'aéronef en situation d'urgence.

L'organe de manœuvre 2 est doté d'une première extrémité 5 de liaison avec la porte et le ressort 3 est disposé entre un élément de butée fixe 4 et l'organe de manœuvre 2. Le ressort 3, dans l'état actif du dispositif 1, provoque un écartement entre l'élément de butée fixe 4 et la première extrémité 5 de l'organe de manœuvre. Ainsi, le dispositif 1 peut être monté au sein du mécanisme d'ouverture de la porte d'aéronef, par une première fixation au niveau de la première extrémité 5 de l'organe de manœuvre 2 et par une deuxième fixation au niveau de l'élément de butée fixe 4 dans une disposition où l'écartement entre ces deux fixations provoque l'ouverture de la porte.

L'organe de manœuvre 2 comporte de plus une deuxième extrémité dite de verrouillage. Cette deuxième extrémité 6 est adaptée à coopérer avec un organe de retenue constitué ici d'un crochet rotatif 7 pour maintenir le dispositif dans son état passif, prêt à être activé, le ressort 3 étant comprimé. La deuxième extrémité 6 de l'organe de manœuvre 2 comporte un doigt axial de retenue 8 fixé transversalement sur la deuxième extrémité 6 et le crochet rotatif 7 est adapté à retenir ce doigt 8 lorsque le dispositif 1 est dans son état passif. Le crochet rotatif 7 retient ainsi l'organe de manœuvre 2 en maintenant comprimé le ressort 3.

Le crochet rotatif 7 est associé à un levier 18 qui, lorsqu'il est actionné en vue d'obtenir l'ouverture d'urgence, entraine la rotation du crochet 7 et la libération du doigt 8 autorisant alors la détente du ressort 3 et par conséquent le passage du dispositif 1 à sa position active.

Le dispositif 1 comporte un cylindre de coulissement 9 fixé sur l'élément de butée fixe 4 et constituant un axe permettant le coulissement de l'organe de manœuvre 2 par rapport à l'élément de butée fixe 4, suivant un axe de déplacement X.

L'organe de manœuvre 2 est ici réalisé en deux parties : un élément de première extrémité 10 sur lequel est située la première extrémité 5, et un élément de deuxième extrémité 11 sur lequel est située la deuxième extrémité 6.

Le cylindre de coulissement 9 comporte une première portion 13 tubulaire et une deuxième portion 14 tubulaire. Dans le présent exemple, la deuxième portion 14 présente un diamètre supérieur à la première portion 13. La deuxième portion 14 présente de une rainure 15 traversante dans laquelle le doigt 8 est engagé.

Le coulissement de l'organe de manœuvre 2 sur le cylindre de coulissement 9 est assuré d'une part par une bague de friction 16 guidant le coulissement de l'élément de deuxième extrémité 11 sur la deuxième portion 14, et d'autre part par une bague de friction 17 guidant le coulissement de l'élément de première extrémité 10 sur la première portion 13. Le crochet rotatif 7 est également monté tournant sur le cylindre de coulissement 9.

L'élément de deuxième extrémité 11 comporte, à son extrémité opposée à la deuxième extrémité 6, une collerette 19 d'appui du ressort 3. Sur les figures 1 et 2, le ressort est donc comprimé entre la collerette 19 et l'élément de butée fixe 4.

L'élément de première extrémité 10 comporte une butée rotative 20 qui est escamotable et qui présente une forme cylindrique. Toute forme présentant une dissymétrie de révolution peut être utilisée pour former la base du cylindre qui est constitué par la butée rotative. En effet, la butée rotative 20 doit être dissymétrique pour pouvoir occuper deux positions angulaires, une première position angulaire de transmission où la butée rotative 20 présente ici deux surfaces d'entrainement 26 en vis-à-vis de l'élément de deuxième extrémité 11, et une deuxième position angulaire de débrayage où la butée rotative 20 présente une section englobée dans le contour d'une ouverture de débrayage pratiquée dans l'élément de deuxième extrémité 11, au niveau de la collerette 20.

Dans le présent exemple, la base du cylindre qui est constitué par la butée rotative 20 est un cercle aplati de part et d'autre d'un diamètre ce qui génère un cylindre comportant deux méplats 21 opposés. Les portions de la butée rotative 20 qui sont en dehors des méplats 21 comportent un moletage 22, ou tout autre revêtement, facilitant sa prise en main en vue de sa rotation. Les surfaces d'entrainement 26 sont constituées par la tranche de la butée rotative 20, au niveau de ses portions qui sont en dehors des méplats 21.

La butée rotative 20 est montée tournante sur l'élément de première extrémité 10 et un ressort 23 disposé entre l'élément de première extrémité 10 et la butée rotative 20 sollicite cette dernière contre une bague d'arrêt en rotation 24 qui est fixée sur l'élément de première extrémité 10, à l'opposé du ressort 23.

La butée rotative 20 est ainsi formée d'un manchon dont la surface interne est un cylindre à base circulaire et dont la surface externe est un cylindre comportant au moins un méplat, ce manchon étant monté selon une liaison pivot glissant sur l'élément de première extrémité 10, les surfaces d'entrainement 26 étant constituées par la tranche de ce manchon. Sur sa portion recevant la butée rotative 20 en liaison pivot, l'élément de première extrémité 10 présente une surface externe cylindrique à base circulaire.

Du côté du ressort 23, l'élément de première extrémité 10 comporte une surface d'arrêt 25 adaptée à arrêter en translation la butée rotative 20.

La butée rotative 20 est ainsi mobile en translation selon l'axe de déplacement X par rapport à l'élément de première extrémité 10 dans les limites imposées par, d'un côté, la surface d'arrêt 25 et, de l'autre côté, par la bague 24.

Dans la configuration des figures 1 et 2, la butée rotative 20 est dans sa première position angulaire de transmission dans laquelle la butée rotative 20 présente les deux surfaces d'arrêt 26 en vis-à-vis de la collerette 19 de l'élément de deuxième extrémité 11. Dans cette configuration, l'élément de deuxième extrémité 11 est adapté à entrainer en translation selon l'axe de déplacement X l'élément de première extrémité 10 grâce à la butée rotative 20. En effet, lors de la manœuvre du levier 18 par un utilisateur en vue de déclencher l'ouverture d'urgence, le crochet rotatif 7 libère le doigt 8 et permet l'expansion du ressort 3. Sous la charge du ressort 3, sur la collerette 19, l'élément de deuxième extrémité 11 se translate suivant l'axe de déplacement X. L'élément de deuxième extrémité 11 entraine avec lui en translation la butée rotative 20 grâce aux surfaces d'entrainement 26. La butée rotative 20 se translate alors suivant l'axe X en glissant sur l'élément de première extrémité 10 jusqu'à ce que la butée rotative 20 vienne en butée contre la surface d'arrêt 25. Durant la translation conjointe de l'élément de deuxième extrémité 11 et de la butée rotative 20 jusqu'au contact de cette dernière avec la surface d'arrêt 25, l'élément de première extrémité 10 reste fixe et l'élément de deuxième extrémité 11 coulisse sur l'élément de première extrémité 10 au niveau d'un ajustement glissant 12.

Le ressort 23 est logé dans une gorge 34 dans laquelle il se loge complètement lorsque la butée rotative 20 entre en contact avec la surface d'arrêt 25.

Lorsque la butée rotative 20 est contre la surface d'arrêt 25, la butée rotative 20 poursuit sa translation d'axe X, sous la charge du ressort 3, en entrainant à son tour l'élément de première extrémité 10 en translation d'axe X. La force permettant l'ouverture d'urgence de la porte d'aéronef est ainsi transmise du ressort 3 à la collerette 19, puis à la butée rotative 20 par les surfaces d'entrainement 26, et à l'élément de première extrémité 5 par la surface d'arrêt 25.

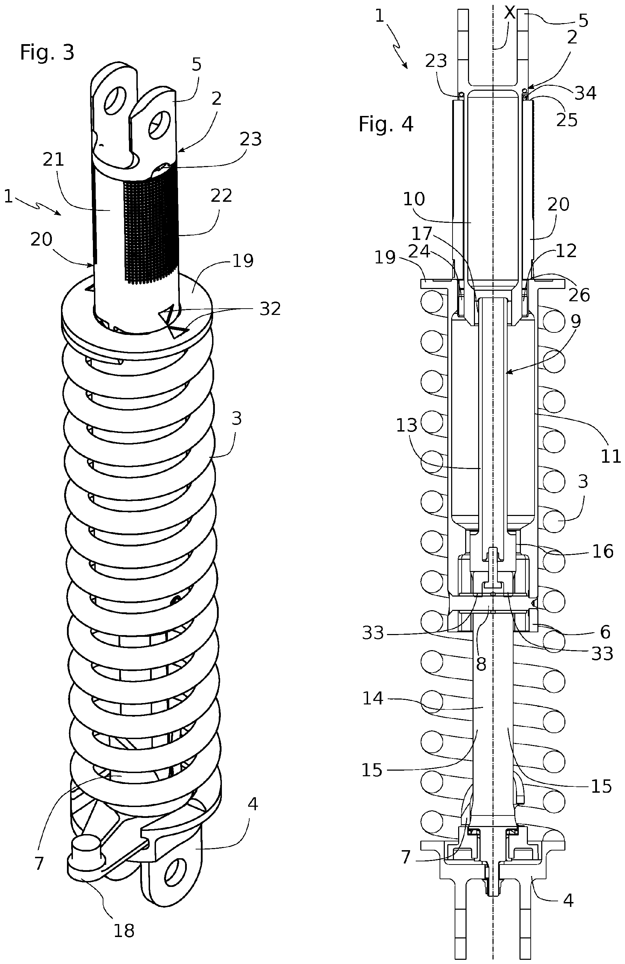

L'activation du dispositif 1 conduit alors à la position des figures 3 et 4 correspondant à l'ouverture totale de la porte d'aéronef. Cette position a été atteinte grâce à la pression de la collerette 19 sur la butée rotative 20 et de la butée rotative 20 sur l'élément de première extrémité 10. Cependant, en fin de course, tel que représenté aux figures 3 et 4, le doigt axial de retenue 8 vient en butée contre l'extrémité 33 de la rainure 15. Cette extrémité 33 de la rainure 15 constitue une butée de fin de course pour le mouvement d'expansion du ressort 3.

Selon une caractéristique préférée, l'organe de manœuvre 2 comporte ainsi une butée de fin de course 33 limitant son déplacement sous l'effet de la poussée du ressort 3, ce qui libère la pression sur la butée rotative en fin d'activation du dispositif pour faciliter le passage de la butée rotative de sa position angulaire de transmission à sa position angulaire de débrayage.

Dans la position de fin de course des figures 3 et 4, le ressort 3 est contenu entre la collerette 19 et l'élément de butée fixe 4 grâce au maintien du doigt 8 contre l'extrémité 33 de la rainure 15. Le ressort 3 n'exerce donc plus de pression sur la butée rotative 20. L'organe de manœuvre 2 étant en butée sur l'extrémité de la rainure 15, un jeu permettant la rotation de la butée rotative 20 est permis, en vue du débrayage. En effet, les dimensions de l'organe de manœuvre 2, notamment la distance entre le doigt 8 et la collerette 19, sont choisies pour que la butée rotative 20 soit maintenue à l'écart de la bague d'arrêt en rotation 24 lorsque le dispositif 1 est dans sa position de fin de course, libérant ainsi la rotation de la butée rotative 20. Autrement dit, en fin d'activation, le dispositif 1 passe automatiquement dans une configuration autorisant le débrayage.

Le passage du dispositif 1 de son état passif des figures 1 et 2 à son état activé des figures 3 et 4 illustre le fonctionnement du dispositif 1 lors de son déclenchement en vue de l'ouverture d'urgence de la porte d'aéronef.

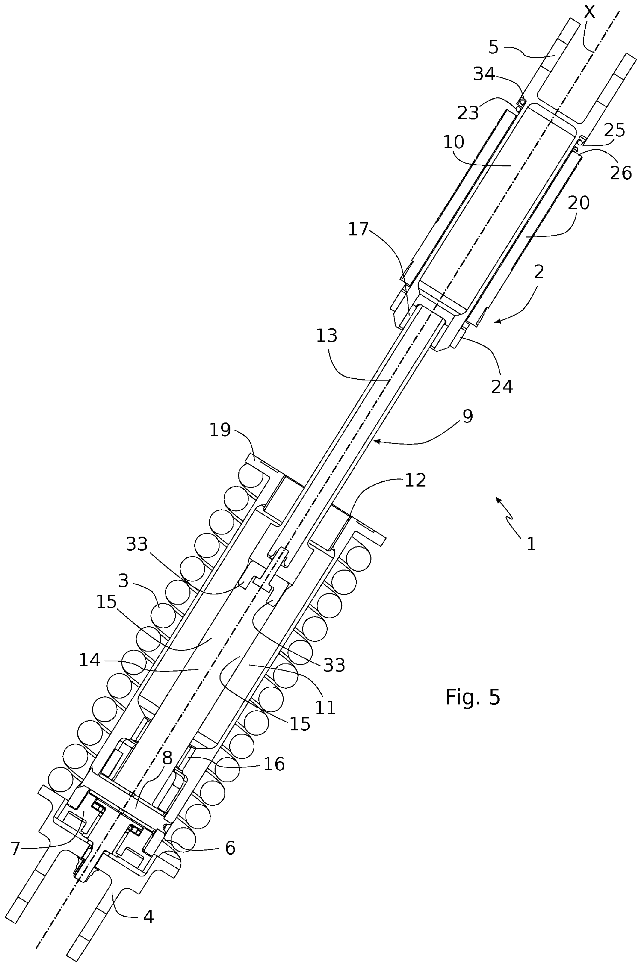

La figure 5 illustre une fonction supplémentaire du dispositif 1 selon laquelle le dispositif 1 remplit une fonction d'ouverture de service. Selon cette fonction d'ouverture de service, l'élément de première extrémité 10 coulisse librement le long de la première portion 13 du cylindre de coulissement 9 tandis que l'élément de deuxième extrémité 11 est maintenu en place par le crochet rotatif 7. Durant ce coulissement permettant la fonction d'ouverture de service, les éléments 10, 11 peuvent s'emboiter et se déboiter au niveau de la zone 12.

Cette possibilité de coulissement de l'élément de première extrémité 10 permet l'ouverture et la fermeture de la porte dans les conditions normales d'opération, sans que le dispositif 1 ne soit déclenché.

Le dispositif 1 remplit de plus une autre fonction dite de débrayage et permettant, lorsque le dispositif 1 est dans sa position de fin de course des figures 3 et 4 suite au déclenchement de l'ouverture d'urgence de la porte, de refermer immédiatement la porte d'aéronef.

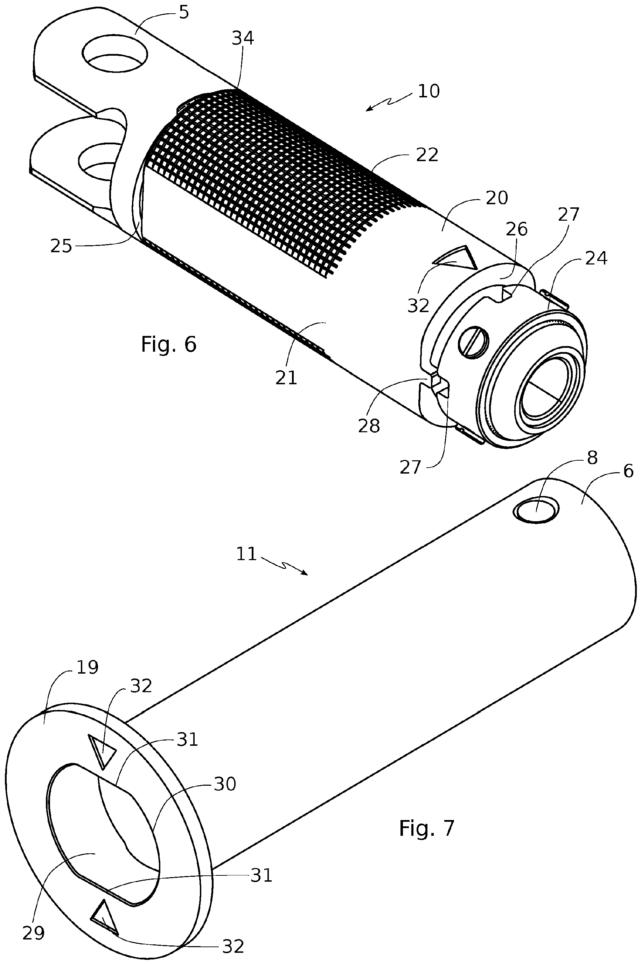

Les figures 6 et 7 représentent respectivement l'élément de première extrémité 10 et l'élément de deuxième extrémité 11 séparés.

En référence à la figure 6, la bague d'arrêt en rotation 24 est fixée par tout moyen sur l'élément de première extrémité 10, par exemple par vissage. Cette bague 24 comporte, dans le présent exemple, quatre encoches 27 régulièrement réparties sur sa circonférence, de part et d'autre de deux diamètres perpendiculaires. La butée rotative 20 comporte quant à elle deux dents 28 diamétralement opposées. La sollicitation de la butée rotative 20 contre la bague d'arrêt en rotation 24 sous la charge du ressort 23 permet à la butée rotative 20 d'occuper au moins deux positions angulaires stables : la position angulaire de transmission illustrée à la figure 6 dans laquelle les dents 28 sont engagées chacune dans une encoche 27, et une autre position angulaire de débrayage dans laquelle la butée rotative 20 a été tournée d'un quart de tour autour de l'axe X, par rapport à l'élément de première extrémité 10, les deux dents 28 s'engageant alors dans les deux autres encoches 27 de la bague d'arrêt en rotation.

Le ressort 23 permet à la butée rotative 20 de rester dans une position angulaire stable durant la fonction d'ouverture de service. En effet, la porte d'aéronef peut être ouverte et refermée dans le cadre de la fonction d'ouverture de service, le dispositif 1 étant donc dans son état passif, tandis que la butée rotative 20 reste angulairement fixe par l'emboitement des dents 28 dans les encoches 27 correspondantes, sous la charge du ressort 23. La butée rotative 20 ne peut donc pas se retrouver dans une position angulaire faussée lors de la mise en œuvre de la fonction d'ouverture de service.

La figure 7 rend visible l'intérieur de l'élément de deuxième extrémité 11 au niveau de la collerette 19. L'élément de deuxième extrémité 11 comporte une ouverture de débrayage 30 entourée par la collerette 19. Cette ouverture de débrayage 30 présente une forme complémentaire de la forme du cylindre qui est constitué par la butée rotative 20. L'ouverture de débrayage 30 présente ainsi une surface interne cylindrique avec des méplats 31.

Lorsque la butée rotative 20 est dans sa position angulaire de débrayage, les méplats 21 de la butée rotative 20 sont alignés avec les méplats 31 de l'ouverture de débrayage 30 de sorte que la butée rotative 20 peut coulisser dans l'ouverture 30, librement. Dans la position angulaire de débrayage, la section de la butée rotative 20 est englobée dans le contour de l'ouverture de débrayage 30, c'est à dire qu'aucun élément de l'élément de deuxième extrémité ne s'oppose au coulissement de la butée rotative 20 dans l'ouverture de débrayage 30. La notion de section renvoie ici à une coupe perpendiculaire à l'axe de déplacement X.

Dans sa position angulaire de transmission, lorsque la butée rotative 20 est tournée de 90 degrés par rapport à la position angulaire de débrayage, les deux surfaces d'entrainement 26 se positionnent en vis-à-vis des méplats 31 de l'ouverture 30. Ainsi, la butée rotative 20 ne peut plus coulisser à l'intérieur de l'ouverture 30 de sorte que l'élément de deuxième extrémité 11 peut entrainer en translation la butée rotative 20.

La butée rotative 20 et la collerette 19 comportent avantageusement des flèches 32 diamétralement opposées et indiquant, lorsque les flèches de la butée rotative 20 sont alignées avec les flèches de la collerette 19, que la butée rotative 20 est dans position angulaire de transmission. L'équipage de l'aéronef peut ainsi contrôler visuellement que le dispositif 1 est opérationnel pour une ouverture d'urgence.

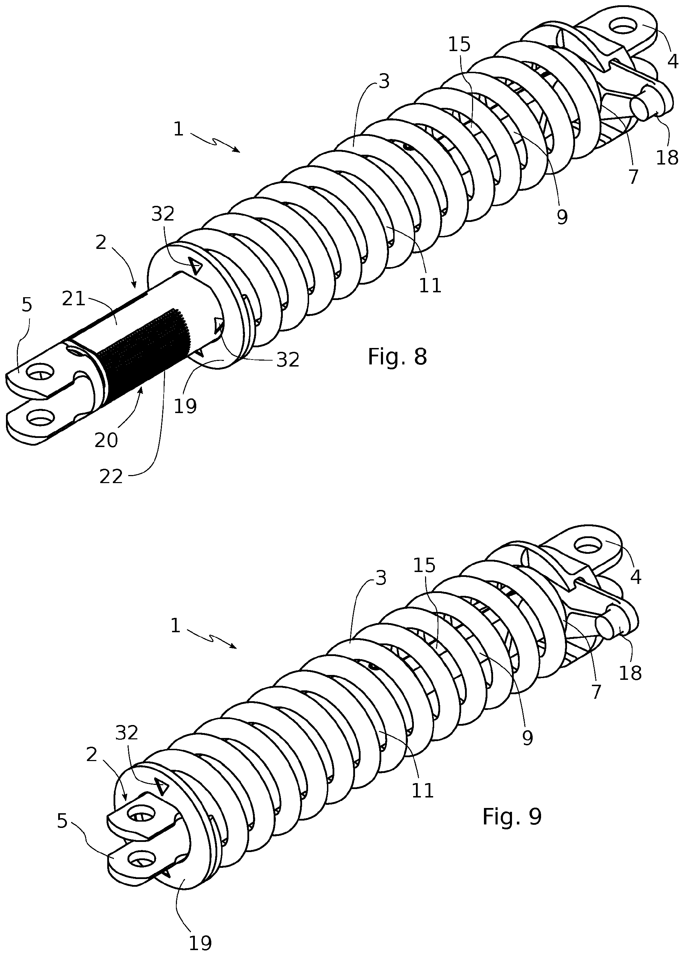

Les figures 8 et 9 illustrent la fonction de débrayage du dispositif d'ouverture d'urgence. Le passage du dispositif 1 de sa position activée en fin de course suite à une ouverture d'urgence (figure 3) à une position débrayée dans laquelle la fermeture de la porte d'aéronef est possible malgré l'activation du dispositif 1 (figure 8) est réalisé par simple manipulation de la butée rotative 20.

A partir de la position de la figure 3, les flèches 32 étant alignées, l'utilisateur pivote la butée rotative 20 de 90 degrés (voir figure 7 dans laquelle les flèches 32 ne sont plus alignées). Le passage de la butée rotative 20 de sa position angulaire de transmission à sa position angulaire de débrayage est réalisé par l'utilisateur qui :
- pivote la butée rotative 20 d'un quart de tour autour de l'axe X, sur l'élément de première extrémité 10, ce qui est permis par la butée de fin de course 33 qui retient l'organe de manœuvre 2 dans une position où l'élément 11 de deuxième extrémté repousse la butée rotative 20 à l'écart de la bague d'arrêt en rotation 24, libérant ainsi la rotation de la butée rotative, puis
- relâche la butée rotative 20, le ressort 23 sollicitant alors la butée rotative 20 de retour contre la bague 24, de sorte que les dents 28 prennent place dans les encoches 27 correspondant à cette nouvelle position angulaire.

A partir de la position de la figure 7, la butée rotative 20 peut coulisser librement dans l'ouverture 30 de sorte que la porte d'aéronef peut être complètement refermée, ce qui correspond à la position de la figure 9.

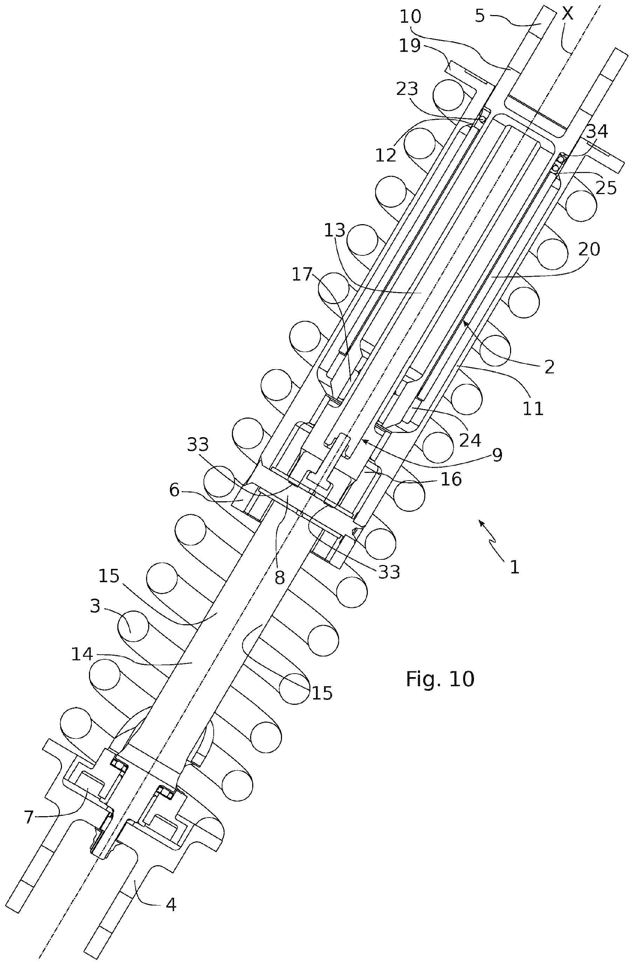

La figure 10 est une vue en coupe du dispositif 1 dans sa position de la figure 9. Dans cette position, l'élément de première extrémité 10 a coulissé le long de la première portion 13 du cylindre de coulissement 9.

Le cylindre de coulissement 9 regroupe les fonctions de :
- guidage de l'organe de manœuvre 2 en translation selon l'axe de déplacement X ;
- guidage de l'élément 10 de première extrémité en translation par rapport à l'élément 11 de deuxième extrémité aussi bien lors de la fonction d'ouverture de service que pendant le débrayage du dispositif 1 ;
- guidage en rotation du crochet rotatif 7 ;
- maintien angulaire de l'organe de manœuvre 2 empêchant ce dernier de tourner autour de l'axe de déplacement X par rapport à l'élément de butée fixe 4
- butée de fin de course pour l'organe de manœuvre 2, le doigt 8 venant en butée contre l'extrémité 33 de la rainure 15 lorsque le dispositif 1 est dans son état activé (voir figure 4).

Des variantes de réalisation du dispositif 1 peuvent être mises en œuvre sans sortir du cadre de l'invention. Par exemple, le verrouillage de la deuxième extrémité 6 de l'organe de manœuvre 2 peut être réalisé par tout moyen mécanique. De même, la butée rotative 20 peut présenter toute autre forme avec une dissymétrie de rotation qui autorise une première position angulaire où au moins une surface d'entrainement est présentée en vis-à-vis de l'ouverture de débrayage 30, et une deuxième position angulaire où la butée rotative 20 peut coulisser dans l'ouverture de débrayage. L'ouverture de débrayage, quant à elle, peut également présenter toute forme à même d'englober la section de la butée rotative 20 quand elle est dans sa position angulaire de débrayage, et de présenter une surface d'appui pour la surface d'entrainement 26 lorsque la butée rotative 20 est dans sa position angulaire de transmission. Par ailleurs, d'autres couples de formes et contreformes, autres que les dents 28 et les encoches 27, peuvent être envisagées pour maintenir la butée rotative 20 dans ses positions angulaires.

## Revendications

1. Dispositif (1) d'ouverture d'urgence d'une porte d'aéronef dotée d'un mécanisme d'ouverture, comprenant :
- des moyens d'actionnement du mécanisme d'ouverture, commutables entre un état passif et un état actif d'activation du mécanisme d'ouverture, et comprenant : un organe de manœuvre tubulaire (2) doté d'une première extrémité (5) de liaison avec la porte, et d'une deuxième extrémité (6) de verrouillage ; des moyens élastiques de compression (3) disposés entre un élément de butée fixe (4) et l'organe de manœuvre (2) ; un organe de retenue (7) de la deuxième extrémité (6) de verrouillage, mobile entre une position fermée de verrouillage de la deuxième extrémité (6) de verrouillage, dans une position de l'organe de manœuvre (2) correspondant à l'état passif des moyens d'actionnement dans laquelle les moyens élastiques (3) sont maintenus comprimés, et une position ouverte de libération de la deuxième extrémité (6) de verrouillage autorisant le déplacement de l'organe de manœuvre (2) selon un axe de déplacement (X) vers une position correspondant à l'état actif des moyens d'actionnement, sous l'effet de l'effort résultant de l'expansion des moyens élastiques (3) ;
- des moyens d'activation (18) des moyens d'actionnement adaptés pour entrainer l'ouverture de l'organe de retenue (7) ;
**caractérisé en ce que** :
- l'organe de manœuvre (2) comporte un élément (10) de première extrémité et un élément (11) de deuxième extrémité mobiles en translation l'un par rapport à l'autre suivant l'axe de déplacement (X), la première extrémité (5) de l'organe de manœuvre (2) étant située sur l'élément (10) de première extrémité et la deuxième extrémité (6) de verrouillage de l'organe de manœuvre (2) étant située sur l'élément (11) de deuxième extrémité ;
- l'élément (10) de première extrémité comporte une butée rotative (20) escamotable cylindrique, mobile entre : une première position angulaire de transmission où la butée rotative (20) présente une surface d'entrainement (26) en vis-à-vis de l'élément (11) de deuxième extrémité, l'élément (11) de deuxième extrémité étant alors adapté à entrainer en translation selon l'axe de déplacement (X) l'élément (10) de première extrémité, lors de l'activation des moyens d'actionnement ; et une deuxième position angulaire de débrayage où la butée rotative (20) présente une section englobée dans le contour d'une ouverture de débrayage (30) pratiquée dans l'élément (11) de deuxième extrémité, l'élément (10) de première extrémité étant alors librement coulissant en translation selon l'axe de déplacement (X) par rapport à l'élément (11) de deuxième extrémité.

2. Dispositif selon la revendication 1, **caractérisé en ce que** la butée rotative (20) est montée tournante autour de l'axe de déplacement (X).

3. Dispositif selon l'une des revendications 1 ou 2, **caractérisé en ce que** la butée rotative (20) est montée glissante le long de l'axe (X).

4. Dispositif selon l'une quelconque des revendications précédentes, **caractérisé en ce que** la section de la butée rotative (20) présente une dissymétrie de révolution.

5. Dispositif selon l'une quelconque des revendications précédentes, **caractérisé en ce que** l'ouverture de débrayage (30) de l'élément (11) de deuxième extrémité présente une section ajustée à la section de la butée rotative (20).

6. Dispositif selon l'une quelconque des revendications précédentes, **caractérisé en ce que** la butée rotative (20) est formée d'un manchon dont la surface interne est un cylindre à base circulaire et dont la surface externe est un cylindre comportant au moins un méplat (21), ce manchon étant monté selon une liaison pivot glissant sur une portion de l'élément (10) de première extrémité qui présente une surface externe cylindrique à base circulaire, la surface d'entrainement (26) étant constituée par la tranche de ce manchon.

7. Dispositif selon la revendication 6, **caractérisé en ce que** l'ouverture de débrayage (30) de l'élément (11) de deuxième extrémité comporte au moins un méplat (31) sur sa surface interne (29), le méplat (21) de la butée rotative (20) étant en vis-à-vis du méplat (31) de l'élément (11) de deuxième extrémité lorsque la butée rotative (20) est dans sa deuxième position angulaire de débrayage.

8. Dispositif selon l'une quelconque des revendications précédentes, **caractérisé en ce que** l'ouverture de débrayage (30) de l'élément (11) de deuxième extrémité comporte sur sa surface interne (29) une portion de guidage de l'élément (10) de première extrémité.

9. Dispositif selon l'une quelconque des revendications précédentes, **caractérisé en ce qu'**il comporte une bague (24) d'arrêt en rotation fixée sur l'élément (10) de première extrémité, la butée rotative (20) et la bague (24) d'arrêt en rotation étant solidarisables en rotation par des dents (28) insérées dans des encoches (27).

10. Dispositif selon la revendication 9, **caractérisé en ce que** l'élément (10) de première extrémité comporte un ressort (23) sollicitant la butée rotative (20) contre la bague (24) d'arrêt en rotation.

11. Dispositif selon l'une des revendications 9 ou 10, **caractérisé en ce que** le ressort (23) est disposé dans une gorge (34) dans laquelle le ressort (23) peut rentrer complètement.

12. Dispositif selon l'une quelconque des revendications précédentes, **caractérisé en ce que** l'élément (10) de première extrémité comporte une surface d'arrêt (25) de la translation selon l'axe de déplacement (X) de la butée rotative (20), cette surface d'arrêt (25) étant disposée en vis-à-vis de la butée rotative (20), à l'opposé de la surface d'entrainement (26).

13. Dispositif selon l'une quelconque des revendications précédentes, **caractérisé en ce que** l'élément (11) de deuxième extrémité comporte une collerette (19) d'appui des moyens élastiques de compression (3), cette collerette (19) étant disposée autour de l'ouverture de débrayage (30) de l'élément (11) de deuxième extrémité.

14. Dispositif selon l'une quelconque des revendications précédentes, **caractérisé en ce qu'**il comporte un cylindre de coulissement (9) coaxial avec l'axe de déplacement (X), l'élément (10) de première extrémité et l'élément (11) de deuxième extrémité étant montés coulissants sur ce cylindre de coulissement (9).

15. Dispositif selon la revendication 14, **caractérisé en ce que** le cylindre de coulissement (9) comporte une butée de fin de course (33) pour l'organe de manœuvre (2).

## Patentansprüche

1. Vorrichtung (1) zur Notöffnung einer Flugzeugtür mit einem Öffnungsmechanismus, umfassend:
- Mittel zur Betätigung des Öffnungsmechanismus, die zwischen einem passiven Zustand und einem aktiven Zustand der Aktivierung des Öffnungsmechanismus umschaltbar sind und umfassen: ein rohrförmiges Betätigungsorgan (2) mit einem ersten Ende (5) zur Verbindung mit der Tür und einem zweiten Verriegelungsende (6); elastische Kompressionsmittel (3), die zwischen einem festen Anschlagelement (4) und dem Betätigungsorgan (2) angeordnet sind; ein Halteorgan (7) für das zweite Verriegelungsende (6), das beweglich ist zwischen einer geschlossenen Position der Verriegelung des zweiten Verriegelungsendes (6) in einer dem passiven Zustand der Betätigungsmittel entsprechenden Position des Betätigungsorgans (2), in welcher die elastischen Mittel (3) zusammengedrückt gehalten werden, und einer offenen Position der Freigabe des zweiten Verriegelungsendes (6), welche die Verschiebung des Betätigungsorgans (2) entlang einer Verschiebungsachse (X) zu einer dem aktiven Zustand der Betätigungsmittel entsprechenden Position hin unter der Einwirkung der aus der Ausdehnung der elastischen Mittel (3) resultierenden Kraft ermöglicht;
- Mittel zur Aktivierung (18) der Betätigungsmittel, die dazu eingerichtet sind, das Öffnen des Halteorgans (7) zu bewirken:
**dadurch gekennzeichnet, dass**:
- das Betätigungsorgan (2) ein Element (10) des ersten Endes und ein Element (11) des zweiten Endes aufweist, die relativ zueinander entlang der Verschiebungsachse (X) translatorisch beweglich sind, wobei sich das erste Ende (5) des Betätigungsorgans (2) am Element (10) des ersten Endes befindet und das zweite Verriegelungsende (6) des Betätigungsorgans (2) sich am Element (11) des zweiten Endes befindet;
- das Element (10) des ersten Endes einen zylindrischen einziehbaren Drehanschlag (20) aufweist, der beweglich ist zwischen: einer ersten Winkelposition der Übertragung, in welcher der Drehanschlag (20) eine Antriebsfläche (26) gegenüber dem Element (11) des zweiten Endes aufweist, wobei das Element (11) des zweiten Endes dann dazu eingerichtet ist, das Element (10) des ersten Endes bei der Aktivierung der Betätigungsmittel entlang der Verschiebungsachse (X) translatorisch zu bewegen; und einer zweiten Winkelposition der Auskupplung, in welcher der Drehanschlag (20) einen Querschnitt aufweist, der von der Kontur einer Auskupplungsöffnung (30), die in dem Element (11) des zweiten Endes ausgebildet ist, umschlossen wird, wobei das Element (10) des ersten Endes dann entlang der Verschiebungsachse (X) in Bezug auf das Element (11) des zweiten Endes translatorisch frei gleitend ist.

2. Vorrichtung nach Anspruch 1, **dadurch gekennzeichnet, dass** der Drehanschlag (20) um die Verschiebungsachse (X) drehbar gelagert ist.

3. Vorrichtung nach einem der Ansprüche 1 oder 2, **dadurch gekennzeichnet, dass** der Drehanschlag (20) entlang der Achse (X) gleitend gelagert ist.

4. Vorrichtung nach einem der vorhergehenden Ansprüche, **dadurch gekennzeichnet, dass** der Querschnitt des Drehanschlags (20) eine Rotationsasymmetrie aufweist.

5. Vorrichtung nach einem der vorhergehenden Ansprüche, **dadurch gekennzeichnet, dass** die Auskupplungsöffnung (30) des Elements (11) des zweiten Endes einen Querschnitt aufweist, der an den Querschnitt des Drehanschlags (20) angepasst ist.

6. Vorrichtung nach einem der vorhergehenden Ansprüche, **dadurch gekennzeichnet, dass** der Drehanschlag (20) von einer Hülse gebildet wird, deren Innenfläche ein Zylinder mit kreisförmiger Grundfläche ist und deren Außenfläche ein Zylinder ist, der wenigstens eine Abflachung (21) aufweist, wobei diese Hülse mittels einer Schwenkverbindung gleitend auf einem Abschnitt des Elements (10) des ersten Endes gelagert ist, der eine zylindrische Außenfläche mit kreisförmiger Grundfläche aufweist, wobei die Antriebsfläche (26) von der Stirnseite dieser Hülse gebildet wird.

7. Vorrichtung nach Anspruch 6, **dadurch gekennzeichnet, dass** die Auskupplungsöffnung (30) des Elements (11) des zweiten Endes wenigstens eine Abflachung (31) auf ihrer Innenfläche (29) aufweist, wobei sich die Abflachung (21) des Drehanschlags (20) gegenüber der Abflachung (31) des Elements (11) des zweiten Endes befindet, wenn sich der Drehanschlag (20) in seiner zweiten Winkelposition der Auskupplung befindet.

8. Vorrichtung nach einem der vorhergehenden Ansprüche, **dadurch gekennzeichnet, dass** die Auskupplungsöffnung (30) des Elements (11) des zweiten Endes auf ihrer Innenfläche (29) einen Abschnitt zur Führung des Elements (10) des ersten Endes aufweist.

9. Vorrichtung nach einem der vorhergehenden Ansprüche, **dadurch gekennzeichnet, dass** sie einen Drehsicherungsring (24) aufweist, der auf dem Element (10) des ersten Endes befestigt ist, wobei der Drehanschlag (20) und der Drehsicherungsring (24) durch Zähne (28), die in Aussparungen (27) eingreifen, drehfest verbindbar sind.

10. Vorrichtung nach Anspruch 9, **dadurch gekennzeichnet, dass** das Element (10) des ersten Endes eine Feder (23) aufweist, die den Drehanschlag (20) gegen den Drehsicherungsring (24) vorspannt.

11. Vorrichtung nach einem der Ansprüche 9 oder 10, **dadurch gekennzeichnet, dass** die Feder (23) in einer Auskehlung (34) angeordnet ist, in welche sich die Feder (23) vollständig hineinbewegen kann.

12. Vorrichtung nach einem der vorhergehenden Ansprüche, **dadurch gekennzeichnet, dass** das Element (10) des ersten Endes eine Anschlagfläche (25) für die Translation des Drehanschlags (20) entlang der Verschiebungsachse (X) aufweist, wobei diese Anschlagfläche (25) gegenüber dem Drehanschlag (20), entgegengesetzt zu der Antriebsfläche (26), angeordnet ist.

13. Vorrichtung nach einem der vorhergehenden Ansprüche, **dadurch gekennzeichnet, dass** das Element (11) des zweiten Endes einen Flansch (19) zur Abstützung der elastischen Kompressionsmittel (3) aufweist, wobei dieser Flansch (19) um die Auskupplungsöffnung (30) des Elements (11) des zweiten Endes herum angeordnet ist.

14. Vorrichtung nach einem der vorhergehenden Ansprüche, **dadurch gekennzeichnet, dass** sie einen mit der Verschiebungsachse (X) koaxialen Gleitzylinder (9) aufweist, wobei das Element (10) des ersten Endes und das Element (11) des zweiten Endes auf diesem Gleitzylinder (9) verschiebbar gelagert sind.

15. Vorrichtung nach Anspruch 14, **dadurch gekennzeichnet, dass** der Gleitzylinder (9) einen Endanschlag (33) für das Betätigungsorgan (2) aufweist.

## Claims

1. An emergency opening device (1) for an aircraft door provided with an opening mechanism, comprising:
- means for actuating the opening mechanism, that can be switched between a passive state and an active state of activation of the opening mechanism, and comprising: a tubular operating member (2) provided with a first end (5) linking with the door, and a locking second end (6); elastic compression means (3) disposed between a fixed stop element (4) and the operating member (2); a retaining member (7) for the locking second end (6), that can move between a closed position of locking of the locking second end (6), in a position of the operating member (2) corresponding to the passive state of the actuation means in which elastic means (3) are kept compressed, and an open position of releasing of the locking second end (6) allowing the displacement of the operating member (2) on an axis of displacement (X) to a position corresponding to the active state of the actuation means, under the effect of the effort resulting from the expansion of the elastic means (3);
- activation means (18) for the actuation means suitable for driving the opening of the retaining member (7);
**characterized in that**:
- the operating member (2) comprises a first end element (10) and a second end element (11) that can move in translation with respect to one another on the axis of displacement (X), the first end (5) of the operating member (2) being situated on the first end element (10) and the locking second end (6) of the operating member (2) being situated on the second end element (11);
- the first end element (10) comprises a cylindrical retractable rotary stop (20), that can move between: a first angular position of transmission in which the rotary stop (20) has a driving surface (26) facing the second end element (11), the second end element (11) then being designed to drive the first end element (10) in translation on the axis of displacement (X), upon the activation of the actuation means; and a second angular position of release in which the rotary stop (20) has a section contained within the outline of a release opening (30) formed in the second end element (11), the first end element (10) being then free to slide in translation on the axis of displacement (X) with respect to the second end element (11).

2. The device as claimed in claim 1, **characterized in that** the rotary stop (20) is mounted to rotate about the axis of displacement (X).

3. The device as claimed in one of claims 1 and 2, **characterized in that** the rotary stop (20) is mounted to slip along the axis (X).

4. The device as claimed in any one of the preceding claims, **characterized in that** the section of the rotary stop (20) exhibits a dissymmetry of revolution.

5. The device as claimed in any one of the preceding claims, **characterized in that** the release opening (30) of the second end element (11) has a section fitted to the section of the rotary stop (20).

6. The device as claimed in any one of the preceding claims, **characterized in that** the rotary stop (20) is formed by a sleeve whose inner surface is a circular-based cylinder and whose outer surface is a cylinder comprising at least one flat (21), this sleeve being mounted by a pivot link sliding over a portion of the first end element (10) which has a circular-based cylindrical outer surface, the driving surface (26) being composed of the edge of this sleeve.

7. The device as claimed in claim 6, **characterized in that** the release opening (30) of the second end element (11) comprises at least one flat (31) on its inner surface (29), the flat (21) of the rotary stop (20) being in line with the flat (31) of the second end element (11) when the rotary stop (20) is in its second angular position of release.

8. The device as claimed in any one of the preceding claims, **characterized in that** the release opening (30) of the second end element (11) comprises, on its inner surface (29), a guiding portion of the first end element (10).

9. The device as claimed in any one of the preceding claims, **characterized in that** it comprises a rotation stop ring (24) fixed onto the first end element (10), the rotary stop (20) and the rotation stop ring (24) being able to be secured in rotation by teeth (28) inserted into notches (27).

10. The device as claimed in claim 9, **characterized in that** the first end element (10) comprises a spring (23) stressing the rotary stop (20) against the rotation stop ring (24).

11. The device as claimed in one of claims 9 and 10, **characterized in that** the spring (23) is disposed in a groove (34) into which all of the spring (23) can return.

12. The device as claimed in any one of the preceding claims, **characterized in that** the first end element (10) comprises a surface (25) for stopping the translation on the axis of displacement (X) of the rotary stop (20), this stop surface (25) being disposed in line with the rotary stop (20), opposite the driving surface (26).

13. The device as claimed in any one of the preceding claims, **characterized in that** the second end element (11) comprises a bearing flange (19) for the elastic compression means (3), this flange (19) being disposed around the release opening (30) of the second end element (11).

14. The device as claimed in any one of the preceding claims, **characterized in that** it comprises a sliding cylinder (9) coaxial with the axis of displacement (X), the first end element (10) and the second end element (11) being mounted to slide on this sliding cylinder (9).

15. The device as claimed in claim 14, **characterized in that** the sliding cylinder (9) comprises a travel end stop (33) for the operating member (2).
